# EUROPÄISCHE PATENTSCHRIFT

(11) **EP 2 903 807 B1**
(45) Veröffentlichungstag und Bekanntmachung des Hinweises auf die Patenterteilung: **16.11.2016**
(21) Anmeldenummer: 13737530.9
(22) Anmeldetag: 13.06.2013
(51) Int. Cl.: B29D 30/24, B29D 30/26, B29D 30/32

(54) **HOCHSCHLAGVORRICHTUNG FÜR REIFENSEITENWÄNDE**
TURN-UP MECHANISM FOR SIDEWALLS OF A TIRE
MÉCANISME DE PLIAGE POUR LES FLANCS D'UN PNEUMATIQUE

(30) Priorität: 27.07.2012 DE 102012014987
(43) Veröffentlichungstag der Anmeldung: 12.08.2015
(73) Patentinhaber: Harburg-Freudenberger Maschinenbau GmbH, 21079 Hamburg (DE)
(72) Erfinder: JOBS, Christopher, 29525 Uelzen (DE); WILKENS, Susanne, 21244 Buchholz i.d.N. (DE); WEDEKIND, Werner, 21376 Salzhausen (DE)
(74) Vertreter: Patentanwälte Klickow & Partner Partnerschaftsgesellschaft mbB
(86) Internationale Anmeldenummer: PCT/DE2013/000322
(87) Internationale Veröffentlichungsnummer: WO 2014/015845

(56) Entgegenhaltungen:
- EP-A1- 1 650 012
- WO-A1-2007/093905
- WO-A1-2011/065829
- US-A1- 2010 122 775

## Beschreibung

Die Erfindung betrifft eine Vorrichtung zum Hochschlagen von Reifenseitenwänden auf einer Bombiertrommel zum Bombieren einer Reifenkarkasse nach dem Oberbegriff des Patentanspruchs 1.

Eine derartige Vorrichtung ist zum Beispiel in der DE 103 00 969 A1 gezeigt. Diese hat zwei Kernklemmeinrichtungen zur Aufnahme jeweils eines Wulstkernes, zwei Umschlageinrichtungen mit einer Vielzahl von abspreizbaren Fingern bzw. Hebeln und eine Spindelanordnung zum synchronen axialen Verfahren der Kernklemmeinrichtungen in entgegengesetzte Richtungen und zum synchronen axialen Verfahren der Umschlageinrichtungen in entgegensetzte Richtungen unabhängig von den Kernklemmeinrichtungen. Die Spindelanordnung hat eine Zentralspindel zum Antreiben der Umschlageinrichtungen und eine auf der Zentralspindel gelagerte Hohlspindel zum Ansteuern der Kernklemmeinrichtungen. Die Spindeln sind über eine Kupplung miteinander verbindbar und über einen an der Zentralspindel angreifenden Motor antreibbar. Die Ausbildung der Hohlspindel und die koaxiale Lagerung der Spindeln erfordern jedoch einen hohen fertigungstechnischen und vorrichtungstechnischen Aufwand.

In dem europäischen Patent EP 2 217 433 B1 ist eine Umschlagvorrichtung für Reifenseitenwände gezeigt, deren Spindelanordnung ein Spindelpaar mit zwei parallelen Spindeln hat. Die eine Spindel treibt Kernklemmeinrichtungen und die andere Spindel treibt Umschlageinrichtungen an. Diese Hochschlagvorrichtung verzichtet zwar auf eine Hohlspindel und ist somit fertigungstechnisch einfacher zu fertigen als die vorbeschriebene Hochschlagvorrichtung nach der DE 103 00 969 A1, jedoch werden die von den Spindeln aufgebrachten Schiebekräfte nicht symmetrisch in die Kernklemmeinrichtungen und die Umschlageinrichtungen eingeleitet. Hierdurch können die jeweiligen Wulstkerne schief zueinander ausgerichtet werden, was beim Bombieren eine ungleiche Erhebung der Reifenkarkasse und damit eine ungleiche Berührung mit dem jeweiligen Gürtelpaket ergibt. Als Ergebnis können die Reifen eine ungleichmäßige Massenverteilung zeigen. Zudem verursacht die unsymmetrische Krafteinleitung hohe Reaktionskräfte der Kernklemmeinrichtungen und der Umschlageinrichtungen auf die Bombiertrommel, was in einem gesteigerten Verschleiß und in einer geringen Lebensdauer resultiert.

Aus der WO 2011/065829 A1 ist bereits eine Vorrichtung zur Herstellung von Reifenrohlingen bekannt. Vergleichbare Vorrichtungen werden auch in der EP 1 650 012 A1, der US 2010/122775 A1 sowie der WO2007/093905 A1 beschrieben.

Aufgabe der Erfindung ist es, eine Vorrichtung zum Hochschlagen von Reifenseitenwänden auf einer Bombiertrommel zum Bombieren einer Reifenkarkasse zu schaffen, die die vorgenannten Nachteile beseitigt und bei einem reduzierten fertigungstechnischen und vorrichtungstechnischen Aufwand eine symmetrische Krafteinleitung in Kernklemmeinrichtungen und Umschlageinrichtungen ermöglicht.
Diese Aufgabe wird gelöst durch eine Vorrichtung mit den Merkmalen des Patentanspruchs 1.

Eine erfindungsgemäße Vorrichtung zum Hochschlagen von Reifenseitenwänden auf einer Bombiertrommel zum Bombieren einer Reifenkarkasse hat zwei Kernklemmeinrichtungen, zwei Umschlageinrichtungen und eine Spindelanordnung zum synchronen axialen Verfahren der Kernklemmeinrichtungen in entgegengesetzte Richtungen und zum synchronen axialen Verfahren der Umschlageinrichtungen in entgegengesetzte Richtungen unabhängig von den Kernklemmeinrichtungen. Erfindungsgemäß hat die Spindelanordnung eine Zentralspindel und zwei gleichlaufende Seitenspindeln, zwischen denen die Zentralspindel verläuft, wobei die Kernklemmeinrichtungen der Zentralspindel und die Umschlageinrichtungen den Seitenspindeln oder die Umschlageinrichtungen der Zentralspindel und die Kernklemmeinrichtungen den Seitenspindeln zugeordnet sind.

Eine derartige Vorrichtung zeichnet sich bei einem geringen vorrichtungstechnischen Aufwand durch eine symmetrische Krafteinleitung in die Kernklemmeinrichtungen und in die Umschlageinrichtungen aus. Hierdurch wird ein optimaler lateraler Rundlauf der Kernklemmeinrichtungen und der Umschlageinrichtungen geschaffen. Eine Schiefstellung der Kernklemmeinrichtungen und somit eine Schiefstellung der von den Kernklemmeinrichtungen getragenen Wulstkernen beim Bombieren tritt nicht auf. Es kann die Reifenkakasse keine ungleichen Erhebungen bilden, so dass ein mit der erfindungsgemäßen Vorrichtung bombierter Reifen eine gleichmäßige Massenverteilung aufweist. Gleichzeitig verursacht die symmetrische Krafteinleitung geringere Reaktionskräfte der Kernklemmeinrichtungen und der Umschlageinrichtungen auf die Bombiertrommel, so dass sich die erfindungsgemäße Vorrichtung durch einen geringen Verschleiß und damit eine hohe Lebensdauer auszeichnet.

Bevorzugterweise sind auf der Zentralspindel zwei Spindelmuttern geführt sind, die jeweils zumindest zwei Mitnehmer zum Zusammenwirken mit jeweils einer der zentralspindelseitigen Einrichtungen haben, wobei die Mitnehmer in Umfangsrichtung gleichmäßig verteilt sind. Hierdurch werden die zentralspindelseitigen Einrichtungen und die Spindelmuttern mit minimalem vorrichtungstechnischen Aufwand achssymmetrisch belastet. Bei beispielsweise zwei Mitnehmern pro Einrichtung sind diese bezogen auf die jeweilige Spindelmutter entgegengesetzt zueinander orientiert bzw. in einem Winkel von 180° versetzt zueinander angeordnet. Bei beispielsweise drei Mitnehmern pro Einrichtung sind diese in einem Winkel von 120° versetzt zueinander angeordnet.

Auf den Seitenspindeln sind bevorzugterweise jeweils zwei Spindelmuttern geführt, die zwei parallel laufende Spindelmutterpaare bilden und die jeweils zumindest einen Mitnehmer zum Zusammenwirken mit einer der seitenspindelseitigen Einrichtungen haben, wobei jeder seitenspindelseitigen Einrichtung ein Spindelmutterpaar zugeordnet ist, deren zumindest beiden Mitnehmer in Umfangsrichtung gleichmäßig verteilt sind. Hierdurch werden die seitenspindelseitigen Einrichtungen mit minimalem vorrichtungstechnischen Aufwand achssymmetrisch belastet. Dadurch, dass die zumindest zwei Mitnehmer einer seitenspindelseitigen Einrichtung in Umfangsrichtung gleichmäßig verteilt sind, werden die jeweiligen Spindelmuttern einer Einrichtung an gleichen Umfangsabschnitten belastet, wodurch ein hoher Gleichlauf der jeweils parallel laufenden Spindelmuttern erzielt wird.

Gemäß einer Ausführungsform sind beide Muttern eines Spindelmutterpaares miteinander verbunden. Hierdurch wird eine einseitige Belastung der Mutter verhindert.

Bevorzugterweise ist die Zentralspindel mittig zwischen den Seitenspindeln auf einer Trommelachse gelagert. Hierdurch können die Mitnehmer der Kernklemmeinrichtungen gleich lang und die Mitnehmer der Umschlageinrichtungen gleich lang ausgebildet werden, wodurch die mit der Zentralspindel kämmenden Spindelmuttern beim Verschieben nicht angestellt werden. Zum Anderen werden die Spindelmuttern der Seitenspindeln gleich belastet, so dass diese einen hohen axialen Gleichlauf aufweisen und sich stets in einer gemeinsamen axialen Sollposition befinden.

Bevorzugterweise sind jeweils zwei Mitnehmer für eine der Einrichtungen vorgesehen, wobei die Mitnehmer der Kernklemmeinrichtungen und die Mitnehmer der Umschlageinrichtungen orthogonal zueinander orientiert sind.

Die Kernklemmeinrichtungen sind bevorzugterweise auf einem Trommelgehäuse gelagert, das die Spindelanordnung umgreift und Langlöcher aufweist, durch die die Mitnehmer geführt sind. Das Trommelgehäuse ermöglicht eine stabile und trommelachsnahe Führung der Klemmeinrichtungen, so dass die Mitnehmer entsprechend kurz und hierdurch entsprechend steif ausgeführt werden können.

Vorzugsweise ist jede Umschlageinrichtung auf einem Abschnitt einer das Trommelgehäuse umgreifenden Gleitbuchse gelagert, die die jeweilige Kernklemmeinrichtung mit ihren Mitnehmern verbindet und Langlöcher zum Durchführen der Mitnehmer der seitenspindelseitigen Einrichtungen hat. Hierdurch liegen die Mitnehmer für die zentralspindelseitigen Einrichtungen von einer Trommelmitte aus betrachtet axial außen und die Mitnehmer für die seitenspindelseitigen Einrichtungen axial innen, obwohl die seitenspindelseitigen Einrichtungen in Relation zu den zentralspindelseitigen Einrichtungen axial außen angeordnet sind. Dies ermöglicht die Herstellung von Reifen mit einem erheblichen Größenunterschied. Ein Wechsel der Bombiertrommelwelle sowie eine Vorhaltung einer alternativen Bombiertrommelwelle zum Abdecken eines bestimmten Größenbereiches sind nicht erforderlich. Hierdurch können kleine Fertigungslose mit erheblich unterschiedlichen Reifengrößen ohne eine zeitaufwändige Umrüstung hergestellt werden. Die unterschiedlichen Reifengrößen können im Bereich von 17,5 bis 24,5 Zoll liegen. Zur Anpassung an die unterschiedlichen Reifengrößen ist es lediglich erforderlich, die Kernklemmung und die Fingerkörbe jeweils zu wechseln.

Der steuerungs- und regelungstechnische Aufwand der Vorrichtung bzw. der Spindelanordnung lässt sich dadurch reduzieren, dass die Seitenspindeln über eine Kupplung miteinander in Wirkverbindung stehen. Somit ist lediglich ein Antrieb zum Antreiben der Seitenspindeln notwendig. Die Seitenspindeln können wiederum mit der Zentralspindel gekoppelt sein, so dass zum Ansteuern sämtlicher Spindeln lediglich ein Antrieb notwendig ist. Alternativ kann jedoch bei gekoppelten Seitenspindeln die Zentralspindel auch über einen Einzelantrieb angetrieben werden. Ferner kann auch jede Spindel mit einem Einzelantrieb versehen sein, wobei die beiden Einzelantriebe der Seitenspindeln dann derart angesteuert werden, dass sie im Gleichlauf angetrieben werden.

Sonstige vorteilhafte Ausführungsbeispiele der Erfindung sind Gegenstand weiterer Unteransprüche.

Im Folgenden wird ein bevorzugtes Ausführungsbeispiel der Erfindung anhand schematischer Darstellungen näher erläutert. Es zeigen:
- Fig. 1: einen abgewinkelten Längsschnitt durch eine Seite einer erfindungsgemäßen Vorrichtung, und
- Fig. 2: einen Querschnitt durch eine Bombiertrommel der Vorrichtung.

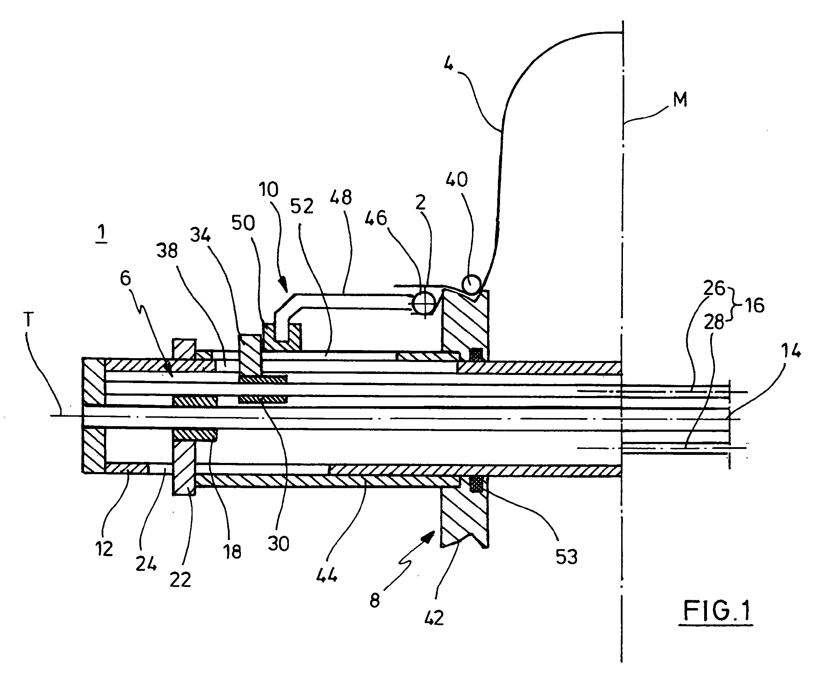

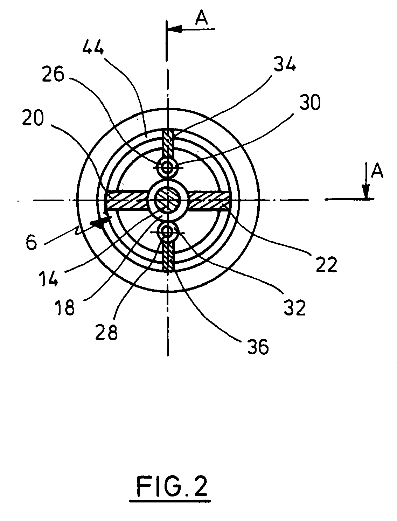

In Fig. 1 ist ein Teilschnitt einer erfindungsgemäßen Vorrichtung 1 zum Hochschlagen von Seitenwänden 2 auf einer Bombiertrommel zum Bombieren einer Reifenkarkasse 4 entlang der in Figur 2 skizzierten Schnittlinie A-A gezeigt. Die Vorrichtung 1 ist symmetrisch zur Trommelmitte M und symmetrisch zur Trommelachse T ausgebildet. Die Trommelachse T verläuft orthogonal zur Trommelmittel M und erstreckt sich in Längsrichtung der Vorrichtung 1 bzw. Bombiertrommel. Die Vorrichtung 1 hat eine Spindelanordnung 6 sowie zwei Kernklemmeinrichtungen 8 und zwei Umschlageinrichtungen 10, von denen aufgrund der Teilschnittdarstellung lediglich jeweils eine Einrichtung 8, 10 dargestellt ist.

Die Spindelanordnung 6 ist durchgängig in der Bombiertrommel ausgebildet und achsensymmetrisch zur Trommelachse T. Auf ihrer jenseits der Trommelmitte M liegenden nicht gezeigten Seite ist die zweite Klemmeinrichtung spiegelsymmetrisch zur ersten Klemmeinrichtung 8 und die zweite Umschlageinrichtung spiegelsymmetrisch zur ersten Umschlageinrichtung 10 gelagert. Sie ist in einem Trommelgehäuse 12 der Bombiertrommel angeordnet, das stirnseitig geschlossen ist. Sie hat eine Zentralspindel 14 und ein Seitenspindelpaar 16.

Die Zentralspindel 14 bildet mit ihrer Drehachse die Trommelachse T. Sie dient in dem gezeigten Ausführungsbeispiel zum synchronen und axialen gegenläufigen Verschieben der Kernklemmeinrichtungen 8. Sie hat hierzu zwei gegenläufige Gewindeabschnitte, die jeweils auf einer Seite der Trommelmitte M angeordnet sind und eine gleiche Steigung aufweisen. Auf den Gewindeabschnitten ist jeweils eine Spindelmutter 18 geführt, die zwei in entgegengesetzte Richtungen zeigende radiale Mitnehmer 20, 22 aufweist (s. Figur 2). Die Mitnehmer 20, 22 sind gleich lang ausgebildet und jeweils durch ein Langloch 24 in dem Trommelgehäuse 12 geführt.

Das Seitenspindelpaar 16 hat, wie in Fig. 2 gezeigt, eine obere Seitenspindel 26 sowie eine untere Seitenspindel 28. Die Seitenspindeln 26, 28 sind bevorzugterweise über eine nicht gezeigte Kupplung miteinander verbunden und befinden sich im Gleichlauf. Sie wirken somit quasi als eine Einzelspindel. Sie dienen in dem gezeigten Ausführungsbeispiel zum Antreiben der Umschlageinrichtung 10 und haben hierzu jeweils zwei gegenläufige Gewindeabschnitte, die jeweils auf einer Seite der Trommelmitte M angeordnet sind. Zum synchronen axialen gegenseitigen Verschieben der Umschlageinrichtungen 10 weisen die Gewindeabschnitte jeweils eine gleiche Steigung auf.

Wenn die Seitenspindeln 26, 28 miteinander mechanisch mittels der Kopplung gekoppelt sind ist lediglich ein Antrieb zum Antreiben der Seitenspindeln 26, 28 vorgesehen. Die Seitenspindeln 26, 28 können wiederum mit der Zentralspindel 14 lösbar gekoppelt sein, so dass zum Ansteuern sämtlicher Spindeln 14, 26, 28 lediglich ein Antrieb notwendig ist. Alternativ kann jedoch bei gekoppelten Seitenspindeln 26, 28 die Zentralspindel 14 auch über einen Einzelantrieb verfügen. Ferner kann auch jede Spindel 14, 26, 28 mit einem Einzelantrieb versehen sein, wobei die beiden Einzelantriebe der Seitenspindeln 26, 28 dann derart angesteuert werden, dass sie im Gleichlauf angetrieben werden. Wesentlich ist, dass die Seitenspindeln 26, 28 im Gleichlauf betrieben werden, und dass die Seitenspindeln 26, 28 und die Zentralspindel 14 so angetrieben werden, dass die in diesem Ausführungsbeispiel seitenspindelseitigen Umschlageinrichtungen 10 unabhängig von den in diesem Ausführungsbeispiel zentralspindelseitigen Kernklemmeinrichtungen 8 axial verfahrbar sind.

Auf den Gewindeabschnitten ist jeweils eine Spindelmutter 30, 32 geführt, die jeweils einen Mitnehmer 34, 36 aufweist. Somit ist jeder Umschlageinrichtung 10 ein parallel laufendes Spindelmutterpaar zugeordnet, deren beiden Mitnehmer 34, 36 fluchtend zueinander angeordnet sind. Die Mitnehmer 34, 36 sind gleich lang ausgebildet und verbunden jeweils durch ein Langloch 38 des Trommelgehäuses 12 und der Gleitbuchse geführt.

Wie in Fig. 2 gezeigt, sind die Zentralspindeln 14 und die Seitenspindeln 26, 28 in einer Ebene, insbesondere in einer Vertikalebene angeordnet, wobei die Zentralspindel 14 mittig zwischen den Seitenspindeln 26, 28 verläuft. Wie ebenfalls in Fig. 2 gezeigt, sind die Mitnehmer 20, 22 der jeweiligen Kernklemmeinrichtung 8 sowie die Mitnehmer 34, 36 der jeweiligen Umschlageinrichtung 10 orthogonal zueinander orientiert. Dabei erstrecken sich die Mitnehmer 20, 22 der Kernklemmeinrichtung 8 bei der Positionierung der Trommelwelle gemäß Fig. 2 in Horizontalrichtung und die Mitnehmer 34, 36 der Umschlageinrichtung 10 entsprechend in Vertikaleinrichtung. Von den Mitnehmern 20, 22 sowie 34, 36 jeweils definierte Ebenen verlaufen rechtswinklig zueinander.

Die Kernklemmeinrichtungen 8 dienen, wie in Figur 1 gezeigt, jeweils zum Tragen eines Wulstkernes 40 sowie zum Einstellen eines axialen Abstandes zwischen den sich seitlich der Trommelmitte M befindenden Wulstkernen 40. Sie haben jeweils einen Ringkörper 42, der auf dem Trommelgehäuse 12 geführt ist und mittels einer ebenfalls auf dem Trommelgehäuse 12 geführten Gleitbuchse 44 mit den Mitnehmern 20, 22 verbunden ist. Zudem haben die Ringkörper 42 eine von der Trommelmitte M abgewandten und einen der jeweiligen Umschlageinrichtung 10 zugewandten Stützring 46 zum kopfseitigen Stützen von abspreizbaren Fingern 48 in ihrer Ruheposition der Umschlageinrichtungen 10.

Die Umschlageinrichtungen 10 sind sogenannte Fingerkörbe, die jeweils einen Ringkörper 50 und eine Vielzahl der an dem Ringkörper 50 fußseitig angelenkten Fingern 48 bzw. Armen oder Hebeln aufweisen. Die Ringkörper 50 sind auf der Gleitbuchse 44 und somit zwischen der Kernklemmeinrichtung 8 und deren Mitnehmern 20, 22 geführt. Die an dem Ringkörper 50 angreifenden Mitnehmer 34, 36 sind durch jeweils ein Langloch 52 in der Gleitbuchse 44 geführt. Hierdurch liegen die Mitnehmer 20, 22 für die Kernklemmeinrichtungen 8 von der Trommelmitte M aus betrachtet axial außen und die Mitnehmer 34, 36 für die Umschlageinrichtungen 10 axial innen, obwohl die Umschlageinrichtungen 10 in Relation zu den Kernklemmeinrichtungen 8 axial außen angeordnet sind.

Im Folgenden wird ein bevorzugtes Bombierverfahren erläutert: Zu Beginn des Verfahrens wird die Reifenkarkasse 4 bombiert. Hierzu wird die Zentralspindel 14 derart angetrieben, dass die Kernklemmeinrichtungen 8 und somit die Wulstkerne 40 aus einer Ausgangsstellung zur Trommelmitte M verfahren werden. Zudem werden die Seitenspindeln 26, 28 derart angesteuert, dass die Umschlageinrichtungen 10 um den gleichen Verfahrweg aus ihrer Ausgangsstellung entsprechend den Kernklemmeinrichtungen 8 zur Trommelmitte M verfahren werden.

Nach dem Bombieren der Reifenkarkasse 4 wird die Ansteuerung der Zentralspindel 14 gestoppt. Nun werden die Seitenwände 2 synchron an der Reifenkarkasse 4 hochgeschlagen. Hierzu werden die Seitenspindeln 26, 28 derart angesteuert, dass die Umschlageinrichtungen 10 weiter in Richtung der Trommelmitte M und somit in Richtung der Kernklemmeinrichtungen 8 verfahren werden. Die Finger 48 werden radial nach außen von den Stützringen 46 weg bewegt und laufen unter Mitnahme der sich in etwa koaxial zur Trommelachse T erstreckenden Seitenwände 2 die Reifenkakasse 4 hoch. Die Finger 48 werden abgespreizt, wobei sie die mitnehmenden Seitenwände 2 gegen die Reifenkarkasse 4 drücken.

Nach dem Hochschlagen der Seitenwände 2 wird die Reifenkarkasse aus der Vorrichtung 1 entnommen und weiteren Bearbeitungsschritten zugeführt. Die Kernklemmeinrichtungen 8 und die Umschlageinrichtungen 10 werden wieder in ihre jeweilige Ausgangsstellung verfahren.

In dem in den Figuren gezeigten Ausführungseispiel sind die Kernklemmeinrichtungen 8 der Zentralspindel 14 und die Umschlageinrichtungen 10 dem Seitenspindelpaar 16 zugeordnet. Die Kernklemmeinrichtungen 8 können jedoch auch dem Seitenspindelpaar 16 und die Umschlageinrichtungen 10 der Zentralspindel 14 zugeordnet sein. Hierzu sind die Mitnehmer 20, 22 der Kernklemmeinrichtungen 8 den Umschlageinrichtungen 10 und die Mitnehmer 34, 36 der Umschlageinrichtungen 10 den Kernklemmeinrichtungen 8 zuzuordnen. Zudem ist die zeitliche Ansteuerung bzw. Betätigung der Zentralspindel 14 und die des Seitenspindelpaar 16 entsprechend anzupassen.

Offenbart ist eine Vorrichtung zum Hochschlagen von Reifenseitenwänden auf einer Bombiertrommel zum Bombieren einer Reifenkarkasse, deren Spindelanordnung eine Zentralspindel und zumindest zwei gleichlaufende Seitenspindeln hat, zwischen denen die Zentralspindel verläuft, wobei die Zentralspindel und die Seitenspindeln unabhängig voneinander antreibbar sind und die Kernklemmeinrichtungen der Zentralspindel und die Umschlageinrichtungen den Seitenspindeln oder die Umschlageinrichtungen der Zentralspindel und die Kernklemmeinrichtungen den Seitenspindeln zugeordnet ist.

Fig. 1 zeigt eine Dichtung 53 die dazu dient, den Innendruck der Karkasse beziehungsweise des Reifens gegenüber der Atmosphäre abzudichten. Durch die Lagerung des Fingerkorbes auf der Gleitbuchse 44 können die Schlitze in der Trommelwelle derart angeordnet werden, dass sich die Position der Dichtung 53 für den größten Reifen noch auf dem geschlossenen Bereich der Welle befindet. Dem größten Reifen ist der größte Abstand zwischen der Dichtung 53 und der Trommelmitte M zugeordnet. Die Schlitze ermöglichen hierbei den erforderlichen geringen Abstand der Kernklemmung und des Fingerkorbes zur Trommelmitte M für den kleinsten Reifen.

## Patentansprüche

1. Vorrichtung zum Hochschlagen von Reifenseitenwänden (2) auf einer Bombiertrommel zum Bombieren einer Reifenkarkasse (4), mit zwei Kernklemmeinrichtungen (8), mit zwei Umschlageinrichtungen (10) und mit einer Spindelanordnung zum synchronen axialen Verfahren der Kernklemmeinrichtungen (8) in entgegengesetzte Richtungen und zum synchronen axialen Verfahren der Umschlageinrichtungen (10) in entgegengesetzte Richtungen unabhängig von den Kernklemmeinrichtungen (8), **dadurch gekennzeichnet, dass** die Spindelanordnung (6) eine Zentralspindel (14) und zumindest zwei gleichlaufende Seitenspindeln (26, 28) hat, zwischen denen die Zentralspindel (14) verläuft, wobei die Kernklemmeinrichtungen (8) der Zentralspindel (14) und die Umschlageinrichtungen (10) den Seitenspindeln (26, 28) oder die Umschlageinrichtungen (10) der Zentralspindel (14) und die Kernklemmeinrichtungen (8) den Seitenspindeln (26, 28) zugeordnet sind.

2. Vorrichtung nach Anspruch 1, wobei auf der Zentralspindel (14) zwei Spindelmuttern (18) geführt sind, die jeweils zumindest zwei Mitnehmer (20, 22) zum Zusammenwirken mit jeweils einer der zentralspindelseitigen Einrichtungen (8; 10) haben, wobei die Mitnehmer (20, 22) in Umfangsrichtung gleichmäßig verteilt sind.

3. Vorrichtung nach Anspruch 1 oder 2, wobei auf den Seitenspindeln (26, 28) jeweils zwei Spindelmuttern (30, 32) geführt sind, die zwei parallel laufende Spindelmutterpaare bilden und die jeweils zumindest einen Mitnehmer (34, 36) zum Zusammenwirken mit einer der seitenspindelseitigen Einrichtungen (10; 8) haben, wobei jeder seitenspindelseitigen Einrichtung (10; 8) ein Spindelmutterpaar zugeordnet ist, deren zumindest beiden Mitnehmer (24, 26) in Umfangsrichtung gleichmäßig verteilt sind.

4. Vorrichtung nach Anspruch 1, 2 oder 3, wobei die Zentralspindel (14) mittig zwischen den Seitenspindeln (26, 28) auf einer Trommelachse (L) gelagert sind.

5. Vorrichtung nach Anspruch 2, wobei die beiden Mitnehmer (20 ,22) der Kernklemmeinrichtungen (8) und die beiden Mitnehmer (34, 36) der Umschlageinrichtungen (10) orthogonal zueinander orientiert sind.

6. Vorrichtung nach einem der vorhergehenden Ansprüche, wobei die Kernklemmeinrichtungen (8) auf einem Trommelgehäuse (12) gelagert sind, das die Spindelanordnung (6) umgreift und Langlöcher (24) aufweist, durch die die Mitnehmer (20, 22) geführt sind.

7. Vorrichtung nach Anspruch 6, wobei jede Umschlageinrichtung (10) auf einem Abschnitt einer das Trommelgehäuse (12) umgreifenden Gleitbuchse (44) gelagert ist, die die jeweilige Kernklemmeinrichtung (8) mit ihren Mitnehmern (20, 22) verbindet und Langlöcher (52) zum Durchführen der seitenspindelseitigen Mitnehmer (34, 36) hat.

8. Vorrichtung nach einem der vorhergehenden Ansprüche, wobei die Seitenspindeln (26, 28) über eine Kupplung miteinander in Wirkverbindung stehen.

9. Vorrichtung nach einem der vorhergehenden Ansprüche, wobei die Spindelmuttern (30, 32) mit einander verbunden sind.

10. Vorrichtung nach einem der vorhergehenden Ansprüche, **dadurch gekennzeichnet, dass** die Gleitbuchse (44) von einer Dichtung (53) abgedichtet ist.

## Claims

1. Device for turning up tyre side walls (2) on a building drum for building a tyre carcass (4), comprising two core clamping devices (8), two turn-up devices (10) and a spindle arrangement for synchronously moving the core clamping devices (8) axially in opposite directions and for synchronously moving the turn-up devices (10) axially in opposite directions independently of the core clamping devices (8), **characterised in that** the spindle arrangement (6) comprises a central spindle (14) and at least two synchronously running side spindles (26, 28) between which the central spindle (14) extends, and the core clamping devices (8) co-operate with the central spindle (14) and the turn-up devices (10) co-operate with the side spindles (26, 28) or the turn-up devices (10) co-operate with the central spindle (14) and the core clamping devices (8) co-operate with the side spindles (26, 28).

2. Device as claimed in claim 1, wherein two spindle nuts (18) are guided on the central spindle (14), each of which has at least two drivers (20, 22) for co-operating respectively with one of the devices (8; 10) on the central spindle side, and the drivers (20, 22) are distributed uniformly in the circumferential direction.

3. Device as claimed in claim 1 or 2, wherein two spindle nuts (30, 32) are guided respectively on the side spindles (26, 28) which form two spindle nut pairs extending parallel and which each have at least one driver (34, 36) for co-operating with one of the devices (10; 8) on the side spindle side, and each device (10; 8) on the side spindle side has a co-operating spindle nut pair, of which at least both drivers (24, 26) are uniformly distributed in the circumferential direction.

4. Device as claimed in claim 1, 2 or 3, wherein the central spindle (14) is mounted centrally on a drum axis (L) between the side spindles (26, 28).

5. Device as claimed in claim 2, wherein the two drivers (20, 22) of the core clamping devices (8) and the two drivers (34, 36) of the turn-up devices (10) are oriented orthogonally with respect to one another.

6. Device as claimed in one of the preceding claims, wherein the core clamping devices (8) are mounted on a drum housing (12) which extends around the spindle arrangement (6) and has slots (24) by means of which the drivers (20, 22) are guided.

7. Device as claimed in claim 6, wherein each turn-up device (10) is mounted on a section of a sliding bush (44) extending around the drum housing (12) which connects the respective core clamping device (8) to its drivers (20, 22) and has slots (52) through which the drivers (34, 36) on the side spindle side pass.

8. Device as claimed in one of the preceding claims, wherein the side spindles (26, 28) are operatively connected to one another via a coupling.

9. Device as claimed in one of the preceding claims, wherein the spindle nuts (30, 32) are connected to one another.

10. Device as claimed in one of the preceding claims, **characterised in that** the sliding bush (44) is sealed by means of a seal (53).

## Revendications

1. Dispositif pour relever les flancs d'un pneu (2) sur un tambour de galbage servant au galbage d'une carcasse de pneu (4), ledit dispositif comprenant deux appareils de serrage de tringle (8), comprenant deux appareils de retournement des plis (10) et comprenant un agencement d'arbres filetés destinés au déplacement axial synchrone des appareils de serrage de tringle (8) dans des directions opposées et destinés au déplacement axial synchrone des appareils de retournement des plis (10) dans des directions opposées indépendamment des appareils de serrage de tringle (8),
**caractérisé en ce que** l'agencement d'arbres filetés (6) comporte un arbre fileté central (14) et au moins deux arbres filetés latéraux (26, 28) fonctionnant de manière synchronisée, arbres filetés latéraux entre lesquels s'étend l'arbre fileté central (14), où les appareils de serrage de tringle (8) sont associés à l'arbre fileté central (14), les appareils de retournement des plis (10) étant associés aux arbres filetés latéraux (26, 28), ou bien les dispositifs de retournement des plis (10) sont associés à l'arbre fileté central (14), les dispositifs de serrage de tringle (8) étant associés aux arbres filetés latéraux (26, 28).

2. Dispositif selon la revendication 1, où deux écrous d'arbre fileté (18) sont guidés sur l'arbre fileté central (14), écrous d'arbre fileté qui comportent à chaque fois au moins deux éléments d'entraînement (20, 22) servant à l'action conjointe à chaque fois avec l'un des appareils (8 ; 10) situé du côté de l'arbre fileté central, où les éléments d'entraînement (20, 22) sont répartis de façon uniforme dans la direction circonférentielle.

3. Dispositif selon la revendication 1 ou 2, où à chaque fois deux écrous d'arbres filetés (30, 32) sont guidés sur les arbres filetés latéraux (26, 28), écrous d'arbres filetés qui forment deux paires d'écrous d'arbres filetés s'étendant parallèlement et qui comportent à chaque fois au moins un élément d'entraînement (34, 36) servant à l'action conjointe avec l'un des appareils (10 ; 8) situé du côté des arbres filetés latéraux, où une paire d'écrous d'arbre fileté est associée à chaque appareil (10 ; 8) situé du côté des arbres filetés latéraux, paire d'écrous d'arbre fileté dont au moins les deux éléments d'entraînement (34, 36) sont répartis de façon uniforme dans la direction circonférentielle.

4. Dispositif selon la revendication 1, 2 ou 3, où l'arbre fileté central (14) est monté sur un axe de tambour (T) situé au milieu entre les arbres filetés latéraux (26, 28).

5. Dispositif selon la revendication 2, où les deux éléments d'entraînement (20, 22) des appareils de serrage de tringle (8) et les deux éléments d'entraînement (34, 36) des appareils de retournement des plis (10) sont orientés de façon orthogonale les uns par rapport aux autres.

6. Dispositif selon l'une quelconque des revendications précédentes, où les appareils de serrage de tringle (8) sont montés sur un carter de tambour (12) qui enveloppe l'agencement des arbres filetés (6) et présente des trous oblongs (24) par lesquels sont guidés les éléments d'entraînement (20, 22).

7. Dispositif selon la revendication 6, où chaque appareil de retournement des plis (10) est monté sur une partie d'une douille de glissement (44) enveloppant le carter de tambour (12), douille de glissement qui relie l'appareil de serrage de tringle respectif (8) à ses éléments d'entraînement (20, 22) et qui comporte des trous oblongs (52) servant au passage traversant des éléments d'entraînement (34, 36) situés du côté des arbres filetés latéraux.

8. Dispositif selon l'une quelconque des revendications précédentes, où les arbres filetés latéraux (26, 28) sont en liaison active l'un avec l'autre, par un accouplement.

9. Dispositif selon l'une quelconque des revendications précédentes, où les écrous d'arbres filetés (30, 32) sont reliés l'un à l'autre.

10. Dispositif selon l'une quelconque des revendications précédentes, **caractérisé en ce que** la douille de glissement (44) est rendue étanche par un joint d'étanchéité (53).
